# FASCICULE DE BREVET EUROPEEN

(11) **EP 0 829 458 B1**
(45) Date de publication et mention de la délivrance du brevet: **02.10.2002**
(21) Numéro de dépôt: 97402080.2
(22) Date de dépôt: 08.09.1997
(51) Int. Cl.: C03C 25/10

(54) **Conducteur optique et son procédé de fabrication**
Optischer Leiter und Verfahren zur Herstellung
Optical conductor and process for its production

(30) Priorité: 13.09.1996 FR 9611197
(43) Date de publication de la demande: 18.03.1998
(73) Titulaire: ALCATEL, 75008 Paris (FR)
(72) Inventeur: Mc Nutt, Christopher, Hickory NC 28602 (US); Boncompain, Valérie, 78570 Andresy (FR)
(74) Mandataire: Laroche, Danièle

(56) Documents cités:
- EP-A- 0 135 993
- WO-A-91/14957
- WO-A-95/20151
- PATENT ABSTRACTS OF JAPAN vol. 018, no. 454 (P-1791), 24 août 1994 & JP 06 148474 A (SUMITOMO ELECTRIC IND LTD;OTHERS: 01), 27 mai 1994,

## Description

L'invention est relative à un conducteur optique comportant une fibre, notamment de verre, entourée par un matériau polymère de protection selon la revendication 1.

L'invention concerne également un procédé de fabrication de ce conducteur optique selon la revendication 9.

Les câbles a fibre(s) optique(s) sont utilisés de plus en plus couramment pour les transmissions de signaux, notamment en télécommunication, en raison de la grande bande passante et de la faible sensibilité au bruit de la transmission optique.

Les conducteurs optiques sont souvent disposés dans un environnement hostile. En particulier ces conducteurs optiques sont soumis à l'humidité et à des variations de température importantes.

On a constaté que les résines polymères des conducteurs optiques soumis à un environnement hostile, notamment un environnement humide, subissent une dégradation qui rend ces polymères cassants, aboutissant au dénudage de la fibre de verre et même, dans les cas extrêmes, à la rupture du conducteur.

Ces défauts proviennent de l'hydrolyse, qui entraîne la séparation des molécules du polymère sous l'influence de l'eau et donc la modification des propriétés physiques du matériau.

Pour limiter les conséquences de l'humidité, jusqu'à présent on a multiplié les mesures de précaution, par exemple en prévoyant des composés, par exemple de la graisse, entourant le conducteur, ou l'ensemble de conducteurs. Une autre précaution consiste à n'utiliser ce type de conducteur qu'à une température d'au plus 70°C.

Les mesures de protection sont onéreuses et pas toujours efficaces. En outre, la limitation à 70°C est pénalisante. L'invention remédie à ces inconvénients.

Elle est caractérisée en ce que le (ou les) matériau(x) polymère(s) entourant la fibre optique conductrice, qui est (sont) du type réticulable(s) aux rayonnements ultraviolets, contient(nent) un additif d'absorption de l'eau, notamment un carbodiimide, un polycarbodiimide ou une polyurée.

Pour fabriquer un conducteur optique ou un ruban conforme à l'invention on introduit l'additif absorbant l'humidité dans la résine polymère avant sa réticulation aux rayonnements ultraviolets.

On a constaté que l'exposition aux rayonnements ultraviolets, pour la réticulation, ne modifiait pas les propriétés d'absorption de l'humidité des additifs. En particulier un mono ou un polycarbodiimide ou un composé polyurée garde ses propriétés d'absorption.

L'action d'absorption de l'eau peut s'effectuer de diverses manières. Par exemple l'eau peut former une structure polymère n'altérant pas, ou sensiblement pas, les propriétés physiques de la résine. Si on utilise un composé polyurée, le polymère formé peut être un polyuréthane. Autrement dit, l'absorption de l'eau ne décompose pas la résine.

Des essais ont montré que la protection apportée par l'additif augmentait avec la proportion de ce dernier dans la résine. Les meilleurs résultats ont été obtenus avec une proportion de 5% en poids d'additif ; toutefois, pour des raisons économiques il est préférable de ne pas dépasser cette valeur de 5%. La gamme préférée est comprise entre 1 et 5% en poids.

L'invention s'applique aussi à un ruban, c'est-à-dire à un ensemble de conducteurs optiques assemblés en parallèle.

Par ailleurs, on a constaté qu'au moins certains des additifs ajoutés au matériau polymère entourant la fibre optique ont un effet bénéfique supplémentaire qui est de s'opposer à la photolyse ou photodégradation, c'est-à-dire à la dégradation du polymère lors d'une exposition prolongée à la lumière. Cette photodégradation se traduit habituellement, d'une part, par un jaunissement de la résine polymère et, d'autre part, par une altération des propriétés physiques de cette résine. Un additif du type carbodiimide s'oppose de façon efficace à la photodégradation. Les meilleurs résultats ont été obtenus avec une proportion de carbodiimide de l'ordre de 1,5% en poids.

Ainsi, l'invention se rapporte également à un conducteur optique comportant une fibre, notamment de verre, entourée par un matériau polymère de protection du type réticulable aux rayonnements ultraviolets, qui est caractérisé en ce que le matériau polymère de protection contient un additif à base de carbodiimide, de préférence s'opposant à la photodégradation.

D'autres caractéristiques et avantages de l'invention apparaîtront avec la description de certains de ses modes de réalisation, celle-ci étant effectuée en se référant aux dessins ci-annexés sur lesquels :
Les figures 1 et 2 sont des diagrammes montrant l'effet, en fonction du temps, de l'humidité sur la qualité de transmission d'une fibre optique pour diverses concentrations d'additif dans la résine de la gaine entourant la fibre optique, et
la figure 3 est un diagramme montrant la variation de l'absorption de lumière en fonction de la longueur d'onde, après vieillissement, d'une résine contenant un additif de type carbodiimide.

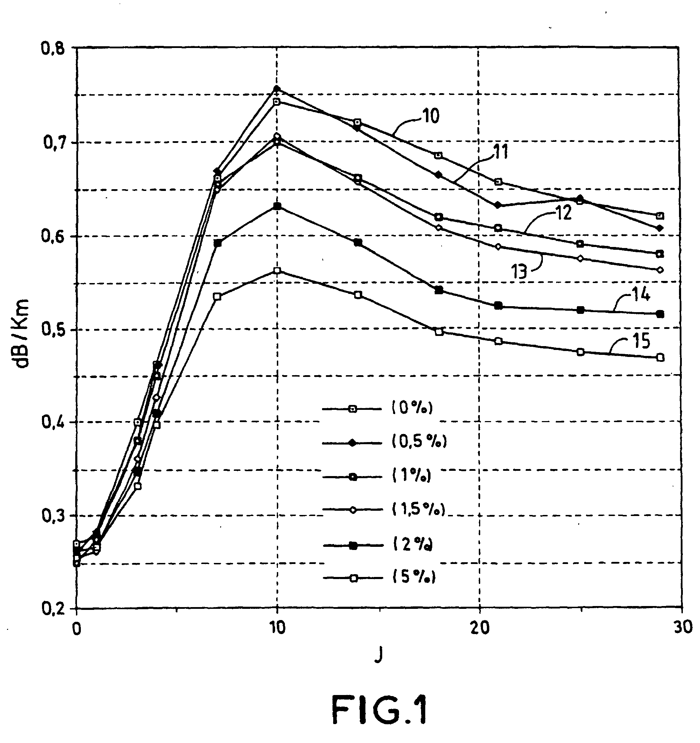

Sur la figure 1, on a représenté des essais effectués avec des fibres optiques dans lesquelles on a injecté de la lumière à une longueur d'onde de 1550 nanomètres.

Cette figure 1 est un diagramme montrant l'évolution de l'atténuation (portée en ordonnées), exprimée en dB/km, de la fibre optique en fonction du temps (porté en abscisses), exprimé en jours (j). Les essais ont été effectués pour six concentrations différentes d'additif.

Dans tous les cas, l'essai a été effectué sur un ruban de quatre conducteurs optiques plongés dans l'eau à une température de 60°C. La résine utilisée est celle de référence 9-75 de la société DSM à laquelle on a ajouté l'additif carbodiimide "stabaxol 1" de la société Rhein-Chemie.

La courbe 10 correspond à une résine polymère sans additif. La courbe 11 correspond à une résine polymère avec 0,5% d'additif. La courbe 12 se rapporte à un taux d'additif de 1%. La courbe 13, à un taux de 1,5%, et les courbes 14 et 15, à des taux respectivement de 2 et 5%.

Dans tous les cas, l'atténuation augmente pour atteindre son maximum au bout d'une dizaine de jours, puis redescend pour se stabiliser après 30 jours. On peut noter une diminution de l'atténuation quand la proportion d'additif augmente. Bien que la courbe 15 corresponde aux meilleurs résultats, on préférera cependant, pour des raisons de coût, un taux d'additif de l'ordre de 2% en poids, ce qui correspond à la courbe 14.

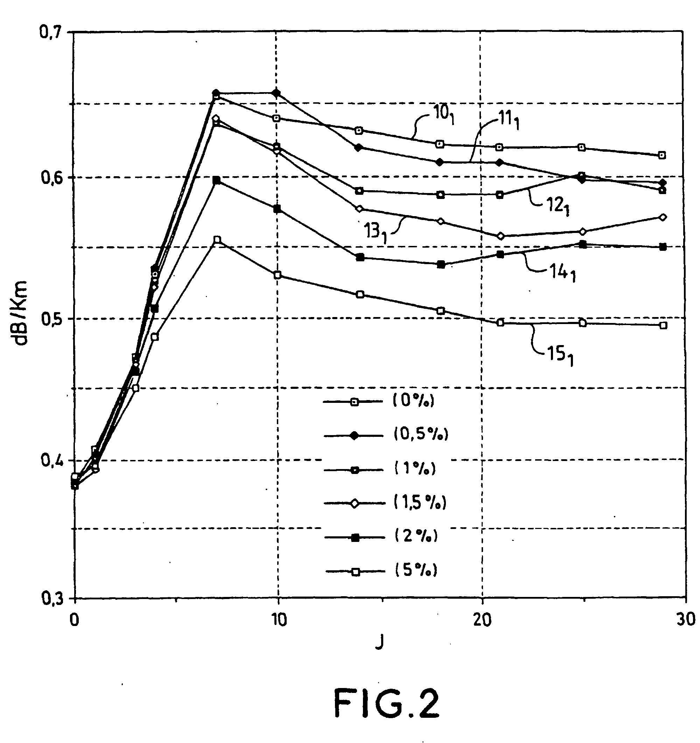

La figure 2 est un diagramme d'essai effectué exactement dans les mêmes conditions que celles de la figure 1, mais en injectant de la lumière à une longueur d'onde d'environ 1300 nanomètres. Les courbes 10₁, 11₁, 12₁, 13₁, 14₁ et 15₁ correspondent aux mêmes proportions d'additif, soit respectivement 0%, 0,5%, 1%, 1,5%, 2% et 5%.

Les résultats obtenus sont similaires à ceux de la figure 1.

Il est à noter que les carbodiimides non seulement absorbent l'eau, mais absorbent également les acides et, dans les deux cas, les transforment en des urées.

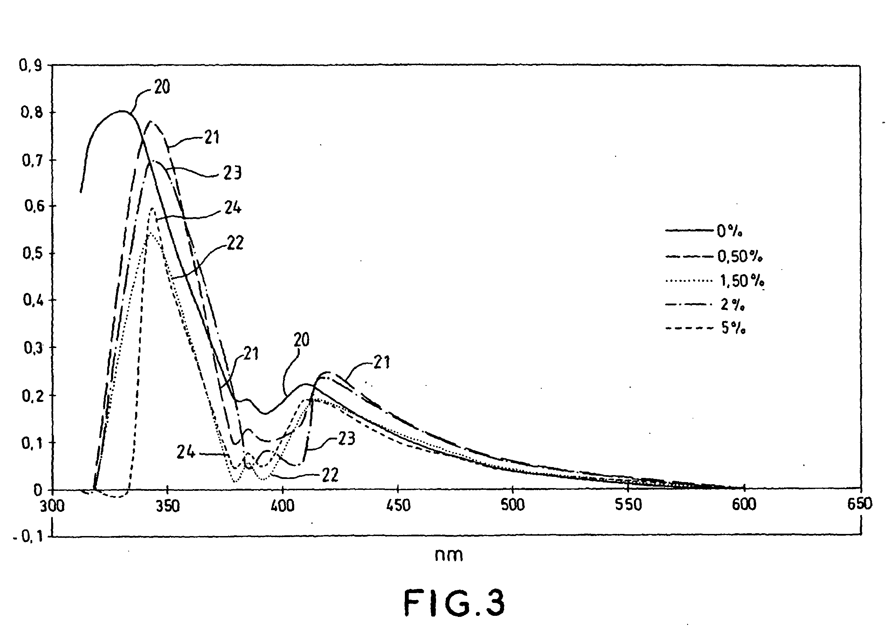

On va maintenant décrire, en relation avec le diagramme de la figure 3, d'autres essais de vieillissement réalisés sur la même résine de référence 9-75 de la société DSM à laquelle on a ajouté l'additif carbodiimide "stabaxol 1" de la société Rhein-Chemie.

Sur ce diagramme, chaque courbe représente le spectre d'absorption de la lumière de ladite résine polymère réticulée aux ultraviolets, une courbe correspondant (comme on le verra plus loin) à une concentration déterminée d'additif. Ces courbes ont été déterminées avec des échantillons sous forme de films. Chaque échantillon a subi un vieillissement accéléré consistant en une exposition à un rayonnement UV, dans une étuve à la température de 50°C, pendant 251 heures.

En ordonnées, on a porté les absorbances, exprimées en valeurs relatives, et, en abscisses, on a porté la longueur d'onde, exprimée en nanomètres (nm). La longueur d'onde est comprise entre 310 et 600 nanomètres, ce qui correspond aux domaines de l'ultraviolet et du visible.

La courbe 20 correspond à une résine polymère sans additif, la courbe 21 à une résine polymère avec 0,5% d'additif, la courbe 22 à 1,5% d'additif, la courbe 23 à 2% d'additif et la courbe 24 à 5% d'additif.

Chacune de ces courbes présente deux maxima d'absorbance, l'un pour 336 nanomètres environ et l'autre pour approximativement 414 nanomètres.

L'amplitude du maxima, ou pic, pour 336 nanomètres représente la photodégradation principale, c'est-à-dire la quantité de radicaux peroxydes dans la résine. Plus l'amplitude de ce pic est élevée et plus la proportion de radicaux peroxydes est importante dans la résine.

On voit ainsi que c'est la courbe 20 (correspondant à de la résine sans additif) qui présente le maxima d'absorbance le plus élevé à 336 nanomètres alors que les autres courbes 21 à 24 - qui correspondent à des résines auxquelles on a ajouté l'additif stabaxol - présentent un maxima moins élevé pour la même longueur d'onde.

On notera aussi que c'est pour une proportion d'environ 1,5% en poids (courbe 12) que le pic à 336 nanomètres est le moins élevé.

Comme indiqué plus haut, la dégradation sous l'effet de la lumière en fonction du temps se traduit, d'une part, par une altération des propriétés physiques de la résine, celle-ci devenant notamment plus cassante, et d'autre·part, par un jaunissement en surface. Ce jaunissement en surface est traduit par le pic à 414 nanomètres. En effet, ce pic d'absorption à 414 nanomètres correspond à la couleur violet/indigo ; l'oeil humain voit donc la couleur complémentaire, c'est-à-dire le jaune/vert. Plus ce maxima est d'amplitude élevée, et plus le jaunissement est sensible. On voit que, là aussi, les meilleurs résultats sont obtenus (c'est-à-dire que le pic est le moins élevé) pour une proportion d'additif de l'ordre de 1,5%.

## Revendications

1. Conducteur optique comportant une fibre, notamment de verre, entourée par un matériau polymère de protection du type réticulable aux rayonnements ultraviolets, **caractérisé en ce que** le matériau polymère de protection contient une résine polymère et un additif d'absorption de l'eau.

2. Conducteur optique selon la revendication 1 tel que l'additif est un carbodiimide ou un polycarbodiimide.

3. Conducteur optique selon la revendication 1 tel que l'additif est à base de carbodiimide.

4. Conducteur optique selon la revendication 3 tel que la proportion de carbodiimide est de l'ordre de 1,5% en poids.

5. Conducteur selon la revendication 1 tel que l'additif est une polyurée.

6. Conducteur selon l'une des revendications 1 à 5 tel que la proportion d'additif dans le matériau polymère est au plus de 5% en poids.

7. Conducteur optique selon la revendication 6 tel que la proportion d'additif dans le matériau polymère est de l'ordre de 2% en poids.

8. Conducteur selon la revendication 6, **caractérisé en ce que** la proportion d'additif dans le matériau polymère est de l'ordre de 1,5 % en poids.

9. Procédé de fabrication d'un conducteur optique selon l'une des revendications 1 à 8 tel que l'additif est mélangé au polymère préalablement à la réticulation aux rayonnements ultraviolets.

10. Ruban de conducteurs optiques où chaque conducteur optique est selon l'une des revendications 1 à 9.

## Claims

1. An optical conductor comprising a fiber, in particular a glass fiber, surrounded by a protective polymer material of the UV-curable type, the conductor being **characterized in that** the protective polymer material contains a polymer resin and a water-absorbing additive.

2. An optical conductor according to claim 1, such that the additive is a carbodiimide or a poly-carbodiimide.

3. An optical conductor according to claim 1, such that the additive is a carbodiimide-based additive.

4. An optical conductor according to claim 3, such that the carbodiimide content is about 1.5% by weight.

5. A conductor according to claim 1, such that the additive is a polyurea.

6. A conductor according to any one of claims 1 to 5, such that the content of additive in the polymer material is not more than 5% by weight.

7. An optical conductor according to claim 6, such that the content of additive in the polymer material is about 2% by weight.

8. A conductor according to claim 6, **characterized in that** the content of additive in the polymer material is about 1.5% by weight.

9. A method of manufacturing an optical conductor according to any one of claims 1 to 8, such that the additive is mixed with the polymer prior to UV-curing.

10. An optical conductor ribbon in which each optical conductor is in accordance with any one of claims 1 to 9.

## Patentansprüche

1. Optischer Leiter mit einer Faser, insbesondere aus Glas, die von einem bei ultravioletter Bestrahlung vernetzbaren Polymerschutzmaterial umgeben ist, **dadurch gekennzeichnet, dass** das Polymerschutzmaterial ein Harzpolymer und einen Zusatz zur Aufnahme von Wasser enthält.

2. Optischer Leiter nach Anspruch 1, bei welcher der Zusatz ein Carbodiimid oder eine Polycarbodiimid ist.

3. Optischer Leiter nach Anspruch 1, bei welcher der Zusatz auf Carbodiimid basiert.

4. Optischer Leiter nach Anspruch 3, bei welcher der Anteil von Carbodiimid in der Größenordnung von 1,5 Gew.-% liegt.

5. Optischer Leiter nach Anspruch 1, bei welcher der Zusatz ein Polycarbamid ist.

6. Optischer Leiter nach einem der Ansprüche 1 bis 5, bei welcher der Anteil des Zusatzes in dem Polymermaterial höchstens 5 Gew.-% beträgt.

7. Optischer Leiter nach Anspruch 6, bei welcher der Anteil des Zusatzes in dem Polymermaterial in der Größenordnung von 2 Gew.-% liegt.

8. Optischer Leiter nach Anspruch 6, **dadurch gekennzeichnet, dass** der Anteil des Zusatzes in dem Polymermaterial in der Größenordnung von 1,5 Gew.-% liegt.

9. Verfahren zur Herstellung eines optischen Leiters nach einem der Ansprüche 1 bis 8, bei welchem der Zusatz mit dem Polymer vermischt wird, bevor die Vernetzung durch ultraviolette Bestrahlung erfolgt.

10. Optisches Leiterband mit optischen Leitern, von denen der Leiter nach einem der Ansprüche 1 bis 9 ausgebildet ist.
